# EUROPÄISCHE PATENTSCHRIFT

(11) **EP 1 329 030 B1**
(45) Veröffentlichungstag und Bekanntmachung des Hinweises auf die Patenterteilung: **08.11.2006**
(21) Anmeldenummer: 01978172.3
(22) Anmeldetag: 20.09.2001
(51) Int. Cl.: H04B 1/40, H04B 1/48

(54) **MULTIBAND-ENDGERÄT**
MULTIBAND TERMINAL
TERMINAL MULTIBANDE

(30) Priorität: 24.10.2000 DE 10052711
(43) Veröffentlichungstag der Anmeldung: 23.07.2003
(73) Patentinhaber: BenQ Mobile GmbH & Co. OHG, 81667 München (DE)
(72) Erfinder: BOLLENBECK, Jan, 80469 München (DE)
(86) Internationale Anmeldenummer: PCT/DE2001/003643
(87) Internationale Veröffentlichungsnummer: WO 2002/035723

(56) Entgegenhaltungen:
- EP-A- 0 744 831
- EP-A- 0 823 751
- EP-A- 0 892 459
- EP-A- 1 001 548
- WO-A-99/46859
- PATENT ABSTRACTS OF JAPAN vol. 1995, no. 11, 26. Dezember 1995 (1995-12-26) & JP 07 221684 A (HITACHI LTD), 18. August 1995 (1995-08-18)

## Beschreibung

Die Erfindung betrifft ein Multiband-Endgerät, welches in mindestens zwei Frequenzbändern arbeitet, mit mindestens einer Sendeeinrichtung und mindestens einer Empfangseinrichtung für jedes der Frequenzbänder, mit mindestens zwei Antennen und mit einer Schaltungsanordnung zur Beschaltung der Anten-nen mit den Sendeeinrichtungen und/oder den Empfangseinrichtungen.

Bei der Entwicklung von Multiband-Endgeräten, beispielsweise Multiband-Mobilfunktelefonen, stellt sich das Problem, mehrere Sende- und Empfangseinrichtungen auf ein Antennensystem zu schalten. Hierzu ist es bisher bekannt, die jeweiligen Sendeeinrichtungen und Empfangseinrichtungen, die für die verschiedenen Frequenzbänder vorgesehen sind, über eine einzige gemeinsame Antenne zu betreiben. Ebenso ist es bekannt, für verschiedene Bänder jeweils unterschiedliche Antennen zu verwenden und auf die einzelnen Antennen jeweils die Sendeeinrichtung und die Empfangseinrichtung des Frequenzbands einzukoppeln.

So ist aus der Europäischen Offenlegungsschrift EP 0 892 459 A1 ein Mobiltelefon mit einer einzelnen Multiband-Antenne bekannt, wobei beim Senden und Empfangen verschiedene Kontaktpunkte zur Ankopplung an die Antenne verwendet werden. Weiterhin ist aus der Europäischen Offenlegungsschrift EP 0 823 751 A2 ein Schaltkreis für Multiband-Funktelefone unter Verwendung von einer oder zwei Antennen bekannt. Dabei ist jeweils eine Antenne einem der Frequenzbänder zugeordnet und wird dabei sowohl für das Senden als auch den Empfang benützt.

Bei Mobilfunk-Standards wie GSM oder DCS ist eine derartige Koppelung der Sende- und der Empfangseinrichtung auf dieselbe Antenne kein Problem, da bei diesen Systemen im sogenannten "Halbduplex-Betrieb" gearbeitet wird, bei dem abwechselnd entweder gesendet oder empfangen wird. Es ist daher eine Ankoppelung der Sendeeinrichtung und der Empfangseinrichtung über einen relativ einfachen Umschalter möglich, der passend zwischen den beiden Einrichtungen hin- und herschaltet.

Schwieriger ist dagegen die Ankoppelung von Sende- und Empfangseinrichtung in einem Mobilfunkstandard wie beispielsweise UMTS, bei dem im "Vollduplex-Betrieb" gearbeitet wird, d.h. bei dem Sender und Empfänger zeitgleich aktiv sind. Bei derartigen Systemen muss auf eine ausreichende Entkoppelung des Sendepfads vom Empfangspfad geachtet werden. Dies wird in konventioneller Weise mittels eines sehr hochwertigen und somit kostspieligen Duplexfilters erreicht. Der Duplexfilter hat neben der Funktion, den Empfangs- und den Sendepfad impedanzrichtig in einem Antennenpfad zusammenzuführen, die Aufgabe, das Sende-Nutzsignal sowie das vom Sendepfad im Empfangsband erzeugte Rauschen vom Eingang der Empfangseinrichtung fernzuhalten. Dieser Filter weist somit in den Durchlassbändern eine relativ hohe Dämpfung in der Größenordnung von 1,5 bis 2,0 db im Sendebereich bzw. 2,0 bis 2,5 db im Empfangsbereich auf. Die Dämpfung im Sendepfad schlägt sich neben einer erhöhten Stromaufnahme des Senders auch in den Systemkosten nieder, da die Endstufe im Sendepfad für einen um den Betrag der Dämpfung höheren Ausgangsleistungspegel ausgelegt werden muss. Ebenso muss bei der Dimensionierung der Stomversorgung der Endstufe der erhöhte Strombedarf berücksichtigt und für eine ausreichende Ableitung der Verlustwärme gesorgt werden. Eine bessere Ableitung der Verlustwärme ist in der Regel aber mit einem größeren Gerätevolumen verbunden, was dem Erfordernis einer Miniaturisierung der Geräte zuwiderläuft.

Im Empfangspfad geht die Dämpfung direkt in die Rauschzahl bzw. die Empfindlichkeit des Empfängers ein. Auch hier führt der Ausgleich der Beeinträchtigung durch die Dämpfung zu erhöhten Systemkosten.

Zusätzliche Dämpfung entsteht außerdem durch die bei der Einkoppelung erforderlichen Schalter bzw. Frequenzweichen, die die Koppelung der einzelnen Funktionsgruppen an die jeweiligen Antennen bewerkstelligen.

Es ist daher Aufgabe der vorliegenden Erfindung, als Alternative zu dem genannten Stand der Technik ein Multiband-Endgerät der eingangs genannten Art zu schaffen, welches eine dämpfungsärmere Verschaltung der Empfangseinrichtungen und der Sendeeinrichtungen mit den Antennen aufweist.

Diese Aufgabe wird durch ein Multiband-Endgerät gemäß Patentanspruch 1 gelöst. Die abhängigen Ansprüche enthalten besonders vorteilhafte Weiterbildungen und Ausgestaltungen der Erfindung.

Bei dem erfindungsgemäßen Multiband-Endgerät ist die Schaltungsanordnung derart ausgebildet, dass zumindest für eines der Frequenzbänder während des Betriebs in diesem Frequenzband die zugehörige Empfangseinrichtung auf eine erste der Antennen als Empfangsantenne geschaltet ist und die zugehörige Sendeeinrichtung auf eine zweite Antenne als Sendeantenne geschaltet ist. Da für dieses Frequenzband die Sendeeinrichtung und die Empfangseinrichtung jeweils getrennte Antennen aufweisen, kann in diesem Frequenzband auch im Vollduplex-Betrieb gearbeitet werden, wobei auf einen aufwendigen Duplexfilter verzichtet werden kann. Es können einfache, getrennte Filter für den Sende- und den Empfangspfad verwendet werden. Durch die räumlich getrennten Antennen sind die Sende- und die Empfangseinrichtung für das betreffende Frequenzband zusätzlich entkoppelt, so dass die Anforderungen an die Selektion durch den Sendefilter in dem jeweiligen Frequenzband erheblich geringer sind als bei dem konventionellen Koppelungsverfahren. Dadurch werden insgesamt die Dämpfungen in der Schnittstelle zwischen den Sende- und den Empfangseinrichtungen.sowie dem Antennensystem minimiert, was direkt mit geringeren Erzeugungskosten für ein solches Multiband-Endgerät sowie gleichzeitig mit einer besseren Übertragungsqualität verbunden ist. Um eine größtmögliche Entkoppelung zu erreichen, werden die Antennen vorzugsweise derart ausgelegt, dass die Polarisationsebenen der Sende- bzw. Empfangsantenne orthogonal zueinander liegen.

Bei einem bevorzugten Ausführungsbeispiel weist das Endgerät einen Umschalter auf, der mit einer der Antennen, die als Empfangsantenne dient, verbunden ist, und der die Empfangsantenne jeweils zu den Empfangseinrichtungen für die verschiedenen Frequenzbänder durchschaltet.

Die verschiedenen Sendeeinrichtungen für die einzelnen Frequenzbänder sind dann beispielsweise über eine Filtereinrichtung auf eine zweite der Antennen, welche als gemeinsame Sendeantenne dient, geschaltet. Diese Filtereinrichtung kann auch mehrstufig aufgebaut sein bzw. aus mehreren hintereinandergeschalteten Filtereinrichtungen bestehen. Ebenso können die Filtereinrichtung, oder einzelne der Filtereinrichtungen innerhalb einer Kette von Filtereinrichtungen, auch variabel ausgestaltet sein, d.h. dass die jeweilige Filtereinrichtung Mittel zur Einstellung der Filterfrequenz aufweist.

In einem anderen bevorzugten Ausführungsbeispiel werden mehrere der in verschiedenen Frequenzbändern arbeitenden Sendeeinrichtungen auf eine gemeinsame Endstufe geschaltet, wobei diese Endstufe vorzugsweise auch Mittel zum Umschalten der Betriebsart für die unterschiedlichen Frequenzbänder aufweist, d.h.es kann beispielsweise eingestellt werden, ob die Endstufe im sogenannten "AB-Betrieb" (Linearbetrieb) oder im C-Betrieb arbeitet, je nachdem, welcher Betrieb für das im jeweiligen Frequenzband verwendete Übertragungsverfahren günstig ist. Vorteilhaft ist außerdem eine Koppelung von verschiedenen Frequenzbändern über gemeinsame Endstufen und dahintergeschalteten Filtereinrichtungen.

Bei einem besonders bevorzugten Ausführungsbeispiel weist das Endgerät zusätzlich zu den internen Antennen einen Antennenausgang für den Anschluss einer externen Antenne, beispielsweise für die Antenne einer KFZ-Freisprecheinrichtung, auf. Das Endgerät enthält außerdem einen Intern-/Externumschalter zum Umschalten zwischen einer der Antennen des Endgeräts und dem Antennenausgang. Hierbei wird vorzugsweise zwischen einer als Sendeantenne verwendeten Antenne des Endgeräts und dem Antennenanschluss umgeschaltet. Dies ist speziell bei einem Betrieb im Fahrzeug von Vorteil, um die Feldstärke in der Fahrgastzelle aus Gründen des Personenschutzes und des EMV-Schutzes der KFZ-Elektronik gering zu halten. Die Empfänger werden in diesem Betriebsfall einer externen Sendeantenne weiterhin über eine geräteeigene Antenne gespeist. Hierdurch ergibt sich in der Praxis kein gravierender Nachteil, da die Kabeldämpfung der derzeit im Handel befindlichen KFZ-Antennen den Gewinn, der sich durch die freistehende KFZ-Antenne gegenüber der geräteeigenen Antenne im KFZ-Inneren ergibt, weitgehend wieder zunichte macht.

Die Erfindung wird im Folgenden unter Hinweis auf die beigefügten Zeichnungen anhand von Ausführungsbeispielen näher erläutert. Die im Folgenden dargestellten Merkmale und die bereits oben beschriebenen Merkmale können nicht nur in den genannten Kombinationen, sondern auch einzeln oder in anderen Kombinationen erfindungswesentlich sein. Es stellen dar:
Figur 1 ein schematisches Blockschaltbild der Schaltungsanordnung eines erfindungsgemäßen Multiband-Endgeräts nach einem ersten Ausführungsbeispiel,
Figur 2 ein schematisches Blockschaltbild der Schaltungsanordnung eines erfindungsgemäßen Multiband-Endgeräts nach einem zweiten Ausführungsbeispiel,
Figur 3 ein schematisches Blockschaltbild der Schaltungsanordnung eines erfindungsgemäßen Multiband-Endgeräts nach einem dritten Ausführungsbeispiel.

Die in den Figuren dargestellten Blockschaltbilder zeigen die für die erfindungsgemäße Anordnung wesentlichen Funktionsblöcke innerhalb des Mobilfunkgeräts. Selbstverständlich enthält das Mobilfunkgerät auch die weiteren üblichen Funktionseinheiten.

Bei allen nachfolgend beschriebenen Ausführungsbeispielen wird von einem Multimode-Mobilfunkgerät ausgegangen, das in einem ersten Frequenzband im Halbduplex-Betrieb arbeitet, in einem zweiten Frequenzband im Halb- oder im Vollduplex-Betrieb und in einem dritten Frequenzband im Vollduplex-Betrieb arbeitet.

Ein typisches Beispiel hierfür ist ein Multiband-Endgerät, das im EGSM-System, im DCS-System und im UMTS-System arbeitet. Das EGSM- sowie das DCS-System arbeiten im Halbduplex-Betrieb, das UMTS-System arbeitet im Vollduplex-Betrieb.

Die jeweiligen Frequenzbänder der einzelnen Sende- und Empfangseinrichtungen liegen wie folgt:

| System | Sendeband | Empfangsband |
|---|---|---|
| EGSM | 0,880 bis 0,915 GHz | 0,925 bis 0,960 GHz |
| DCS | 1,710 bis 1,785 GHz | 1,805 bis 1,880 GHz |
| UMTS | 1,920 bis 1,980 GHz | 2,110 bis 2,170 GHz |

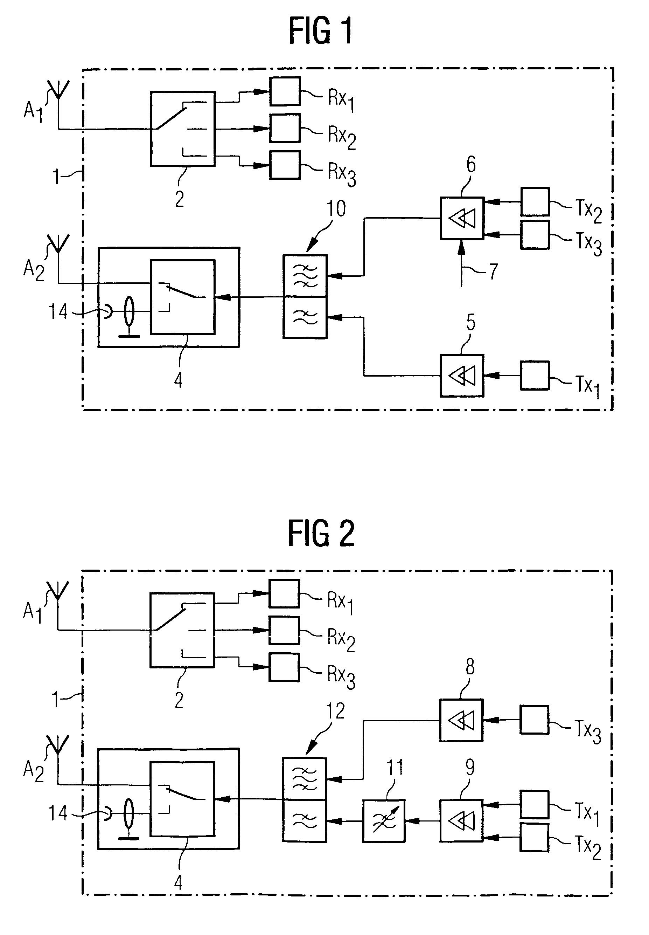

Bei dem Ausführungsbeispiel gemäß Figur 1 teilen sich die beiden Antennen A₁ und A₂ im Mobilfunkgerät in eine Empfangsantenne A₁ und eine Sendeantenne A₂ auf.

Hierbei kann zumindest eine der beiden Antennen als PCB (Printed Circuit Board)- oder Patch-Antenne ins Gerät integriert werden. Vorzugsweise ist dies die Empfangsantenne A₁, da mit einer freistehenden Sendeantenne Änderungen der Anpassung an den Endstufenausgang der Sendeeinrichtung aufgrund von Abschattungen - z.B. durch eine vor der im Mobilfunkgerät integrierten Antenne befindliche Hand - minimiert werden. Bei der anderen Antenne A₂ kann es sich beispielsweise um eine im bzw. am Gerät befindliche Stummelantenne oder dergleichen handeln. Es ist aber auch möglich, beide Antennen als PCB- oder Patch-Antennen oder dergleichen im Gehäuse zu integrieren.

Die erste Antenne A₁, welche als Empfangsantenne dient, ist hierbei über einen Dreifachumschalter 2 mit den Empfangseinrichtungen Rx₁, Rx₂, Rx₃ für die drei Frequenzbänder verbunden.

Die zweite geräteeigene Antenne A₂ ist eingangsseitig über einen Intern-/Externumschalter 4 mit einem Antennenausgang 14 für den Anschluss einer externen Antenne verbunden. Bei dem Intern-/Externumschalter 4 handelt es sich vorzugsweise um einen in der Antennenbuchse bzw. im Antennenausgang 14 integrierten mechanischen Schalter, der automatisch umschaltet, wenn ein Stecker in die Antennenbuchse gesteckt wird.

Die Sendepfade für alle drei Frequenzbänder werden über eine Frequenzweiche, beispielsweise einen Diplexfilter, auf den Eingang des Intern-/Externumschalters 4 geführt. Hierbei kann ein Sendefilter für das im Duplexbetrieb arbeitende Frequenzband, z.B. ein Tiefpass- oder Notch-Filter, mit dem das Sende-Rauschen im zugehörigen Empfangsband gefiltert wird, vorteilhafterweise im Diplexfilter integriert werden. Dies ist in Figur 1 durch die Darstellung zweier Filter als gemeinsamer Block einer Filtereinrichtung 10 dargestellt.

Die Sendeeinrichtungen Tx₂, Tx₃ für das zweite und dritte Frequenzband, beim vorliegenden Ausführungsbeispiel das DCS- und das UTMS-Frequenzband, arbeiten mit einer gemeinsamen Dualband-Endstufe 6. Über einen Schalteingang 7 kann bei einem Bandwechsel die Betriebsart von AB-Betrieb(Linearbetrieb) auf C-Betrieb umgeschaltet werden. Dies ist sinnvoll, da im GSM- bzw. DCS-System eine sogenannte GMSK-Modulation mit einer konstanten Hüllkurve verwendet wird. Dies bedeutet, dass das modulierte HF-Signal eine konstante Amplitude besitzt. Daher können keinerlei Signalverzerrungen aufgrund einer nichtlinearen Verstärker-Kennlinie auftreten. Es ist somit nicht erforderlich, dass in diesen Bändern die Endstufe eine lineare Kennlinie aufweist. Darum kann zur Steigerung des Wirkungsgrads der C-Betrieb verwendet werden. Im UMTS-System wird dagegen eine HPSK-Modulation mit einer nicht konstanten Hüllkurve verwendet. Daher ist in diesem System ein Linearbetrieb des Leistungsverstärkers erforderlich, so dass im AB-Betrieb gearbeitet werden muss.

Bei dem Ausführungsbeispiel gemäß Figur 2 wird wie bei dem Ausführungsbeispiel gemäß Figur 1 die erste Antenne A₁ nur als Sendeantenne für alle drei Frequenzbänder verwendet. Daher kann der gleiche Umschalter 2 verwendet werden, um die Antenne A₁ auf die Empfangseinrichtungen Rx₁, Rx₂. Rx₃ der drei Frequenzbänder zu schalten.

Im Gegensatz zum Ausführungsbeispiel gemäß Figur 1 wird hier jedoch für die Sendeeinrichtung Tx₃ des dritten Frequenzbands (hier des UMTS-Systems), welches im Vollduplexsystem arbeitet, eine Monoband-Linearendstufe 8 verwendet. Stattdessen werden die Sendeeinrichtungen Tx₁ und Tx₂ für die anderen beiden Frequenzbänder (hier EGSM und DCS) auf eine gemeinsame Dualband-Endstufe 9 geleitet. Der Ausgang dieser Dualband-Endstufe 9 wird zunächst auf eine einstellbare Filtereinrichtung 11 geschaltet. Hierbei handelt es sich um einen schaltbaren Tief- passfilter, mit dem die erste Sendeoberwelle im GSM-Betriebsfall unterdrückt werden kann. Die Grenzfrequenz ist dabei derart variierbar, dass die DCS-Grundwelle im DCS-Betriebsfall ungedämpft passieren kann. Anschließend werden der Ausgang der Monoband-Endstufe 8 für das dritte Frequenzband und der Ausgang des schaltbaren Tiefpassfilters 11 wieder auf eine weitere Filtereinrichtung 12 geführt. Diese Filtereinrichtung 12 weist wiederum einen Diplexfilter als Frequenzweiche mit einem integrierten Tiefpass oder Notch-Filter als Sendefilter für das UMTS-Frequenzband auf.

Auch hier wird wie bei dem Ausführungsbeispiel gemäß Figur 1 der Ausgang der letzten Filtereinrichtung 12 wieder auf einen Intern-/Externumschalter 4 zum Umschalten zwischen der geräteeigenen zweiten Antenne A₂ und einem Antennenausgang 14 für eine externe Antenne, beispielsweise eine KFZ-Antenne, geleitet.

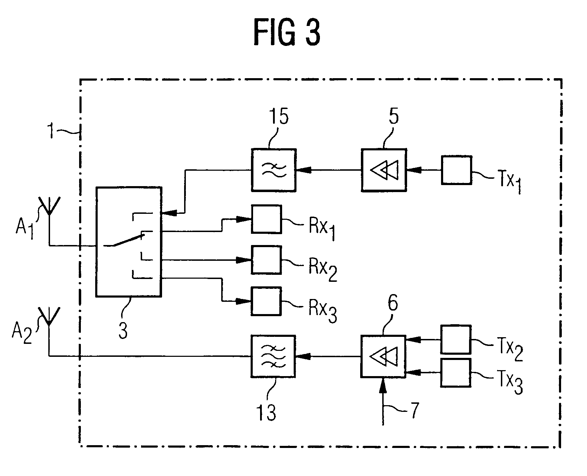

Das dritte Ausführungsbeispiel gemäß Figur 3 eignet sich insbesondere für Mobilfunkgeräte, die nicht für den Betrieb an einer externen Antenne, beispielsweise in einem KFZ, vorgesehen sind.

Auch hier werden erfindungsgemäß für den Betrieb in denjenigen Frequenzbändern, die im Vollduplexbetrieb arbeiten, die beiden geräteeigenen Antennen A₁, A₂ als getrennte Sende- und Empfangsantenne eingesetzt.

In der gezeigten Anordnung wird anstelle des Dreifach-Umschalters 2 zum Anschluss der ersten Antenne 1 ein Vierfach-Umschalter 3 verwendet, wobei zusätzlich zu den drei Empfangseinrichtungen Rx₁, Rx₂, Rx₃ für die drei Frequenzbänder nun die Sendeeinrichtung Tx₁ über eine Endstufe 5 und eine Filtereinrichtung 15 auf die erste Antenne A₁ geschaltet wird. Die Antenne A₁ dient beim Betrieb in diesem Frequenzband folglich sowohl als Sende- als auch als Empfangsantenne, indem mittels des Vierfachumschalters 3 ständig zwischen der Empfangseinrichtung Rx₁ und der Sendeeinrichtung Tx₁ des jeweiligen Frequenzbands, hier des EGSM-Systems, hin- und hergeschaltet wird.

Die zweite Antenne A₂ des Geräts dient dann nur noch als Sendeantenne für das zweite und dritte Frequenzband, d.h. im vorliegenden Ausführungsbeispiel für das DCS- und das UMTS-System. Hierzu werden die Sendeeinrichtungen Tx₂ und Tx₃ des zweiten und dritten Frequenzbands wiederum auf eine Dualband-Endstufe 6 geleitet, die über einen Schalteingang 7 auf die unterschiedlichen Betriebsarten für die beiden Frequenzbänder eingestellt werden kann. Der Ausgang dieser Dualband-Endstufe 6 wird dann durch eine Filtereinrichtung 13 auf den Antenneneingang der zweiten Antenne A₂ geführt. Eine solche DCS/UMTS-Dualband-Antenne lässt sich aufgrund der benachbarten Frequenzbereiche um 1,8 GHz relativ einfach und platzsparend als PCB- oder Patch-Antenne realisieren.

Die Erfindung ist selbstverständlich nicht auf die hier gezeigten Ausführungsbeispiele begrenzt, sondern es bestehen verschiedene weitere Möglichkeiten, erfindungsgemäß die Sende- und Empfangseinrichtungen auf die jeweiligen Antennen zu verkoppeln. Ebenso können selbstverständlich auch Antennensysteme mit mehr als zwei Antennen sowie Endgeräte mit nur zwei (Dualband-Betrieb) oder mit mehr als drei verschiedenen Frequenzbändern erfindungsgemäß verschaltet werden. Ein Beispiel für ein erfindungsgemäßes Dualband-Endgerät ist ein Aufbau gemäß Figur 3, wobei lediglich der Vierfachumschalter 3 durch einen Zweifachumschalter ersetzt wird und zwischen den beiden Empfangseinrichtungen für die beiden Frequenzbänder hin- und herschalten muss, d.h. die erste Antenne A₁ dient in diesem Fall wiederum nur als reine Sendeantenne.

## Patentansprüche

1. Multiband-Endgerät, welches zur Funktion gemäß mindestens zwei Mobilfunkstandards ausgebildet ist, wobei jedem der mindestens zwei Mobilfunkstandards jeweils ein Frequenzband zugeordnet ist, mit einer Sendeeinrichtung (Tx1,Tx2, Tx3) und einer Empfangseinrichtung (Rx1, Rx2,Rx3) für jedes der Frequenzbänder, **gekennzeichnet durch** mindestens zwei internen Antennen (A1, A2) und mit einer Schaltungsanordnung (1) zur Beschaltung der internen Antennen mit den Sendeeinrichtungen (Tx1, Tx2,Tx3) und/oder den Empfangseinrichtungen (Rx1, Rx2, Rx3), wobei
die Schaltungsanordnung derart ausgebildet ist, dass zumindest für eines der Frequenzbänder während des Betriebs in diesem Frequenzband die zugehörige Empfangseinrichtung (Rx2, Rx3) auf eine erste der internen Antennen (A1) als Empfangsantenne geschaltet ist und die zugehörige Sendeeinrichtung (Tx2, Tx3) auf eine zweite der internen Antennen (A2) als Sendeantenne geschaltet ist.

2. Endgerät nach Anspruch 1,
**gekennzeichnet durch** einen Umschalter (2, 3), welcher einen Eingang aufweist, der miteiner ersten der internen Antennen (A1) als Empfangsantenne verbunden ist, und welcher mehrere Ausgänge aufweist, welche mit den Empfangseinrichtungen (Rx1, Rx2, Rx3) für die verschiedenen Frequenzbänder verbunden ist.

3. Endgerät nach Anspruch 2,
**dadurch gekennzeichnet,**
**dass** der Umschalter (3) einen weiteren Ausgang aufweist, der mit einer Sendeeinrichtung (Tx1) zumindest eines der Frequenzbänderverbunden ist, und das Endgerät im Betrieb in diesem Frequenzband die erste interne Antenne (A1) wechselweise als Sende- und Empfangsantenne nutzt.

4. Endgerät nach einem der Ansprüche 1 bis 3,
**dadurch gekennzeichnet,**
**dass** mehrere der in verschiedenen Frequenzbändern arbeitenden Sendeeinrichtungen (Tx1, Tx2, Tx3) über eine Filtereinrichtung (10, 11, 12, 13) auf eine zweite der internen Antennen (A2) als gemeinsame Sendeantenne geschaltet sind.

5. Endgerät nach Anspruch 4, **gekennzeichnet durch** mehrere hintereinandergeschaltete Filtereinrichtungen (11, 12).

6. Endgerät nach Anspruch 4 oder 5,
**dadurch gekennzeichnet,**
**dass** die Filtereinrichtung (10) Mittel zur Einstellung der Filterfrequenz aufweist.

7. Endgerät nach einem der Ansprüche 1 bis 6,
**dadurch gekennzeichnet,**
**dass** mehrere der in verschiedenen Frequenzbändern arbeitenden Sendeeinrichtungen (Tx1, Tx2, Tx3) auf eine gemeinsame Endstufe (6, 9) geschaltet sind.

8. Endgerät nach Anspruch 7,
**dadurch gekennzeichnet,**
**dass** die Endstufe (6) Mittel (7) zum Umschalten der Betriebsart für unterschiedliche Übertragungsverfahren aufweist.

9. Endgerät nach einem der Ansprüche 1 bis 8,
**dadurch gekennzeichnet,**
**dass** das Gerät derart aufgebaut ist, dass es in einem ersten Frequenzband im Halbduplex-Betrieb arbeitet und in einem zweiten Frequenzband im Halbduplex- oder im Vollduplex-Betrieb arbeitet und in einem dritten Frequenzband im Vollduplex-Betrieb arbeitet.

10. Endgerät nach Anspruch 9, **dadurch**
**dadurch gekennzeichnet, daß**
eine erste interne Antenne (A1) des Geräts über einen Dreifach-Umschalter (2) mit den Empfangseinrichtungen (Rx1, Rx2, Rx3) für das erste, das zweite und das dritte Frequenzband verbunden ist und die Sendeeinrichtungen (Tx2, Tx3) für das zweite und dritte Frequenzband über eine gemeinsame, umschaltbare Endstufe (6) verkoppelt werden und ein Ausgang dieser umschaltbaren Endstufe (6) mit einem Ausgang einer Endstufe (5) für die Sendeeinrichtung (Tx1) des ersten Frequenzbands über eine Filtereinrichtung (10) verkoppelt und zu einer zweiten internen Antenne (A2) geführt wird.

11. Endgerät nach Anspruch 9,
**dadurch gekennzeichnet,**
**dass** eine erste interne Antenne (A1) des Geräts über einen Dreifach-Umschalter (2) mit den Empfangseinrichtungen (Rx1, Rx2, Rx3) für das erste, das zweite und das dritte Frequenzband verbunden ist und die Sendeeinrichtungen (Tx1, Tx2) für das erste und zweite Frequenzband über eine gemeinsame Endstufe (9) verkoppelt werden und durch eine schaltbare Filtereinrichtung (11) geleitet werden und ein Ausgang dieser schaltbaren Filtereinrichtung mit einem Ausgang einer Endstufe (8) für die Sendeeinrichtung (Tx3) des dritten Frequenzbands über eine Filtereinrichtung (12) verkoppelt und zu einer zweiten internen Antenne (A2) geführt wird.

12. Endgerät nach Anspruch 9,
**dadurch gekennzeichnet,**
**dass** eine erste interne Antenne (A1) des Geräts über einen Vierfach-Umschalter (3) mit den Empfangseinrichtungen (Rx1, Rx2, Rx3) für das erste, das zweite und das dritte Frequenzband und mit einer Sendeeinrichtung (Tx1) für das erste Frequenzband verbunden ist, und der Vierfach-Umschalter (3) bei einem Betrieb im ersten Frequenzband ständig zwischen der Empfangseinrichtung (Rx1) und der Sendeeinrichtung (Tx1) für das erste Frequenzband hin- und herschaltet, und die Sendeeinrichtungen(Tx2, Tx3) für das zweite und dritte Frequenzband über eine gemeinsame, umschaltbare Endstufe (6) verkoppelt werden und ein Ausgang dieser umschaltbaren Endstufe (6) über eine Filtereinrichtung (13) zu einer zweiten internen Antenne (AZ) geführt wird.

13. Endgerät nach einem der Ansprüche 1 bis 12, **gekennzeichnet durch** einen Antennenausgang (14) für den Anschluss einer externen Antenne und einen Intern-/Externumschalter (4) zum Umschalten zwischen einer der internen Antennen (A2) des Endgeräts und dem Antennenausgang (14).

14. Endgerät nach Anspruch 13,
**dadurch gekennzeichnet,**
**dass** der Intern-/Externumschalter (4) zwischen der als Sendeantenne dienenden zweiten internen Antenne (A2) des Endgeräts und dem Antennenanschluss (14) umschaltet.

## Claims

1. Multiband terminal which is designed to function according to at least two mobile radio standards, with a frequency band being assigned to each of the at least two mobile radio standards, with one transmit device (Tx₁, Tx₂, Tx₃) and one receive device (Rx₁, Rx₂, Rx₃) for each of the frequency bands, **characterised by** at least two internal antennas (A₁, A₂) and with a circuit arrangement (1) for connecting the internal antennas to the transmit devices (Tx₁, Tx₂, Tx₃) and/or the receive devices (Rx₁, Rx₂, Rx₃), with the circuit arrangement being designed in such a way that at least for one of the frequency bands during operation in this frequency band the associated receive device (Rx₂, Rx₃) is switched to a first of the internal antennas (A₁) as a receive antenna and the associated transmit device (Tx₂, Tx₃) is switched to a second of the internal antennas (A₂) as a transmit antenna.

2. Terminal in accordance with claim 1, **characterised by** a changeover switch (2, 3) which features an input that is connected to a first of the internal antennas (A₁) as a receive antenna and which features a number of outputs that are connected to the receive devices (Rx₁, Rx₂, Rx₃) for the different frequency bands.

3. Terminal in accordance with claim 2, **characterised in that** the changeover switch (3) features a further output that is connected to a transmit device (Tx₁) of at least one of the frequency bands, and that in operation in this frequency band the terminal uses the first internal antenna (A₁) alternately as a transmit and receive antenna.

4. Terminal in accordance with one of claims 1 to 3, **characterised in that** a number of the transmit devices (Tx₁, Tx₂, Tx₃) operating in different frequency bands are switched via a filter device (10, 11, 12, 13) to a second of the internal antennas (A₂) as a common transmit antenna.

5. Terminal in accordance with claim 4, **characterised by** a number of filter devices (11, 12) connected in series.

6. Terminal in accordance with claim 4 or 5, **characterised in that** the filter device (10) features means for setting the filter frequency.

7. Terminal in accordance with one of claims 1 to 6, **characterised in that** a number of the transmit devices (Tx₁, Tx₂, Tx₃) operating in different frequency bands are switched to a common final stage (6, 9).

8. Terminal in accordance with claim 7, **characterised in that** the final stage (6) features means (7) for switching over the operating mode for different transmission procedures.

9. Terminal in accordance with one of claims 1 to 8, **characterised in that** the device is constructed in such a way that it operates in a first frequency band in half-duplex mode and in a second frequency band in half-duplex or in full-duplex mode and in a third frequency band in full-duplex mode.

10. Terminal in accordance with claim 9, **characterised in that** a first internal antenna (A₁) of the device is connected via a three-way changeover switch (2) to the receive devices (Rx₁, Rx₂, Rx₃) for the first, second and third frequency band and the transmit devices (Tx₂, Tx₃) for the second and third frequency band are coupled via a common switchable final stage (6) and an output of this switchable final stage (6) is coupled to an output of a final stage (5) for the transmit device (Tx₁) of the first frequency band via a filter device (10) and is routed to a second internal antenna (A₂).

11. Terminal in accordance with claim 9, **characterised in that** a first internal antenna (A₁) of the device is connected via a three-way changeover switch (2) to the receive devices (Rx₁, Rx₂, Rx₃) for the first, second and third frequency band and the transmit devices (Tx₂, Tx₃) for the second and third frequency band are coupled via a common final stage (9) and are routed through a switchable filter device (11) and an output of this switchable filter device is coupled to an output of a final stage (8) for the transmit device (Tx₃) of the third frequency band via a filter device (12) and routed to a second internal antenna (A₂).

12. Terminal in accordance with claim 9, **characterised in that** a first internal antenna (A₁) of the device is connected via a four-way changeover switch (2) to the receive devices (Rx₁, Rx₂, Rx₃) for the first, second and third frequency band and to a transmit device (Tx₁) for the first frequency band, and the four-way changeover switch (3) during operation in the first frequency band constantly switches backwards and forwards between the receive device (Rx₁) and the transmit device (Tx₁) for the first frequency band and the transmit devices (Tx₂, Tx₃) for the second and third frequency band are coupled via a common, switchable final stage (6) and an output of this switchable final stage (6) is routed via a filter device (13) to a second internal antenna (A_{z}).

13. Terminal in accordance with one of claims 1 to 12, **characterised by** an antenna output (14) for connecting an external antenna and an internal/external changeover switch (4) for switching between one of the internal antennas (A₂) of the terminal and the antenna output (14).

14. Terminal in accordance with claim 13, **characterised in that** the internal/external changeover switch (4) switches between the second internal antenna (A₂) of the terminal serving as a transmit antenna and the antenna connection (14).

## Revendications

1. Terminal multibande conçu pour fonctionner selon au moins deux standards de radiocommunication mobile, à chacun desdits standards de radiocommunication mobile étant attribuée une bande de fréquence, avec un dispositif d'émission (Tx1, Tx2, Tx3) et un dispositif de réception (Rx1, Rx2, Rx3) pour chacune des bandes de fréquence, **caractérisé par** au moins deux antennes internes (A1, A2) et une structure de circuit (1) pour brancher les antennes internes aux dispositifs d'émission (Tx1, Tx2, Tx3) et/ou aux dispositifs de réception (Rx1, Rx2, Rx3), ladite structure de circuit étant conçue de façon à ce que pour l'une au moins des bandes de fréquence, pendant le fonctionnement dans cette bande de fréquence, le dispositif de réception correspondant (Rx2, Rx3) soit branché sur une première des antennes internes (A1) servant d'antenne de réception et le dispositif d'émission correspondant (Tx2, Tx3) sur une deuxième des antennes internes (A2) servant d'antenne d'émission.

2. Terminal selon la revendication 1,
**caractérisé par** un commutateur (2, 3), lequel comprend une entrée reliée à une première des antennes internes (A1) servant d'antenne de réception, et lequel comprend plusieurs sorties reliées aux dispositifs de réception (Rx1, Rx2, Rx3) pour les différentes bandes de fréquence.

3. Terminal selon la revendication 2,
**caractérisé en ce que**
le commutateur (3) comprend une autre sortie reliée à un dispositif d'émission (Tx1) de l'une au moins des bandes de fréquence, et **en ce que** le terminal, lorsqu'il fonctionne dans cette bande de fréquence, utilise en alternance la première antenne interne (A1) comme antenne d'émission et de réception.

4. Terminal selon l'une des revendications 1 à 3,
**caractérisé en ce que**
plusieurs des dispositifs d'émission (Tx1, Tx2, Tx3) fonctionnant dans différentes bandes de fréquence sont branchés par l'intermédiaire d'un dispositif de filtrage (10, 11, 12, 13) sur une deuxième des antennes internes (A2) servant d'antenne d'émission commune.

5. Terminal selon la revendication 4, **caractérisé par** plusieurs dispositifs de filtrage (11, 12) montés en série.

6. Terminal selon la revendication 4 ou 5,
**caractérisé en ce que**
le dispositif de filtrage (10) comprend des moyens de réglage de la fréquence de filtre.

7. Terminal selon l'une des revendications 1 à 6,
**caractérisé en ce que**
plusieurs des dispositifs d'émission (Tx1, Tx2, Tx3) fonctionnant dans différentes bandes de fréquence sont branchés sur un étage final (6, 9) commun.

8. Terminal selon la revendication 7,
**caractérisé en ce que**
l'étage final (6) comprend des moyens (7) pour commuter le mode de fonctionnement pour différents procédés de transmission.

9. Terminal selon l'une des revendications 1 à 8,
**caractérisé en ce que**
l'appareil est construit de manière à fonctionner dans une première bande de fréquence en mode semi-duplex et dans une deuxième bande de fréquence en mode semi-duplex ou en mode duplex intégral et dans une troisième bande de fréquence en mode duplex intégral.

10. Terminal selon la revendication 9,
**caractérisé en ce que**
une première antenne interne (A1) de l'appareil est reliée par l'intermédiaire d'un commutateur triple (2) aux dispositifs de réception (Rx1, Rx2, Rx3) pour la première, la deuxième et la troisième bande de fréquence et **en ce que** les dispositifs d'émission (Tx2, Tx3) pour la deuxième et la troisième bande de fréquence sont couplés par l'intermédiaire d'un étage final commutable (6) commun et **en ce qu'**une sortie de cet étage final commutable (6) est couplée à une sortie d'un étage final (5) pour le dispositif d'émission (Tx1) de la première bande de fréquence par l'intermédiaire d'un dispositif de filtrage (10) et est amenée à une deuxième antenne interne (A2).

11. Terminal selon la revendication 9,
**caractérisé en ce que**
une première antenne interne (A1) de l'appareil est reliée par l'intermédiaire d'un commutateur triple (2) aux dispositifs de réception (Rx1, Rx2, Rx3) pour la première, la deuxième et la troisième bande de fréquence et **en ce que** les dispositifs d'émission (Tx1, Tx2) pour la première et la deuxième bande de fréquence sont couplés par l'intermédiaire d'un étage final (9) commun et sont guidés à travers un dispositif de filtrage commutable (11) et **en ce qu'**une sortie de ce dispositif de filtrage commutable est couplée à une sortie d'un étage final (8) pour le dispositif d'émission (Tx3) de la troisième bande de fréquence par l'intermédiaire d'un dispositif de filtrage (12) et est amenée à une deuxième antenne interne (A2).

12. Terminal selon la revendication 9,
**caractérisé en ce que**
une première antenne interne (A1) de l'appareil est reliée par l'intermédiaire d'un commutateur quadruple (3) aux dispositifs de réception (Rx1, Rx2, Rx3) pour la première, la deuxième et la troisième bande de fréquence et à un dispositif d'émission (Tx1) pour la première bande de fréquence et **en ce que** le commutateur quadruple (3), lorsqu'il fonctionne dans la première bande de fréquence, commute en permanence entre le dispositif de réception (Rx1) et le dispositif d'émission (Tx1) pour la première bande de fréquence et **en ce que** les dispositifs d'émission (Tx2, Tx3) pour la deuxième et la troisième bande de fréquence sont couplés par l'intermédiaire d'un étage final commutable (6) commun et qu'une sortie de cet étage final commutable (6) est menée par l'intermédiaire d'un dispositif de filtrage (13) à une deuxième antenne interne (AZ).

13. Terminal selon l'une des revendications 1 à 12,
**caractérisé par** une sortie d'antenne (14) pour le branchement d'une antenne externe et un commutateur interne/externe (4) pour commuter entre l'une des antennes internes (A2) du terminal et la sortie d'antenne (14).

14. Terminal selon la revendication 13,
**caractérisé en ce que**
le commutateur interne/externe (4) commute entre la deuxième antenne interne (A2) servant d'antenne d'émission du terminal et le branchement d'antenne (14).
